**Europäisches Patentamt**

**European Patent Office**

**Office européen des brevets**

(19)

(11) Veröffentlichungsnummer : **0 267 926 B1**

# EUROPÄISCHE PATENTSCHRIFT

(12)

(45) Veröffentlichungstag der Patentschrift :
**13.03.91 Patentblatt 91/11**

(21) Anmeldenummer : **87902425.5**

(22) Anmeldetag : **07.05.87**

(86) Internationale Anmeldenummer :
**PCT/DE87/00206**

(87) Internationale Veröffentlichungsnummer :
**WO 87/06816 19.11.87 Gazette 87/25**

(51) Int. Cl.⁵ : **A61C 8/00**

(54) ZAHNWURZEL-IMPLANTAT HOHER DAUERSCHWINGFESTIGKEIT.

(30) Priorität : **09.05.86 DE 3615733**

(43) Veröffentlichungstag der Anmeldung :
**25.05.88 Patentblatt 88/21**

(45) Bekanntmachung des Hinweises auf die
Patenterteilung :
**13.03.91 Patentblatt 91/11**

(84) Benannte Vertragsstaaten :
**CH DE FR GB IT LI**

(56) Entgegenhaltungen :
**EP-A- 0 131 831**
**WO-A-86/01393**
**DE-A- 3 300 764**
**FR-A- 2 385 384**
**US-A- 3 497 953**
**US-A- 3 955 280**
**US-A- 4 552 532**

(73) Patentinhaber : **Leica Industrieverwaltung
GmbH
Ernst-Leitz-Strasse 30 Postfach 20 20
W-6330 Wetzlar 1 (DE)**

(72) Erfinder : **FRANEK, Henning
Mühlenkopfstrasse 5
W-6333 Braunfels-Tiefenbach (DE)**
Erfinder : **Deutscher, Klaus-Konrad
Lerchenweg 20
W-6330 Wetzlar 1 (deceased) (DE)**
Erfinder : **Brömer, Heinz
Hundsrück 7
W-6330 Wetzlar 26 (DE)**
Erfinder : **ROSENKRANZ, Wolfgang
Auf der Hohl 13
W-6331 Schöffengrund-Niederquembach (DE)**
Erfinder : **Strunz, Volker
Muthesiusstrasse 3
W-1000 Berlin 41 (DE)**

## Beschreibung

Die Erfindung betrifft ein Zahnwurzel-Implantat hoher Dauerschwingfestigkeit, das im Kieferknochen verankert wird und das Mittel zur Aufnahme einer Suprastruktur aufweist.

Natürliche Zähne sind durch das Parodontium mit dem Kieferknochen verbunden. Infolge der Elastizität der Faserstruktur des Zahnhalteapparates ist der Zahn nicht starr im Kieferknochen verankert, sondern elastisch aufgehängt. Diese sogenannte physiologische Beweglichkeit der Zähne variiert von Species zu Species. Beim Menschen beträgt sie ca. 30 μm, d.h. bei maximalem Kaudruck wird der Zahn ca. 30 μm in die Alveole hineingedrückt. Infolge der besonderen Faseranordnung im Parodontium wird dabei der größte Teil des die Zahnalveole umschließenden Kieferknochens nicht auf Druck sondern auf Zug beansprucht. Die bisher bekanntgewordenen Zahnwurzelimplantate können die Funktion des Parodontiums nicht ausreichend simulieren. Da Zahnwurzelimplantate in vielen Fällen für die Verankerung von Brücken, deren zweiter Pfeiler noch ein natürlicher Zahn ist, verwandt werden, ist es notwendig, die Befestigung der Suprastruktur nicht starr an dem Wurzelimplantat vorzunehmen, sondern die bei dem natürlichen Zahn gegenüber dem Kieferknochen vorhandene Mobilität zwischen Suprastruktur und Implantat vorzusehen.

Auf diese Weise werden unphysiologische Kraftmomente während des Kauvorganges an der Grenze Implantat/Knochenlager vermieden. Eine bewegliche, kraftüberleitende Struktur zwischen Suprastruktur und Implantat muß weiterhin so ausgelegt sein, daß Belastungsspitzen beim Kauvorgang abgefangen und nur gedämpft an das Lager abgeführt werden, weil auch beim natürlichen Zahn das parodontium die Funktion eines "Stoßdämpfers" ausübt.

Aus der DE-OS 27 33 394 ist eine Vorrichtung zum Abfangen solcher Druckspitzen bekannt. Hier wird ein Dämpfungselement beschrieben, bei dem in eine mit elastischem Kunststoff ausgefüllte Metallhülse ein mit dem Kern der Zahnwurzel verbundener Bolzen hineinragt.

Es sind auch Suprastrukturen bekannt, bei denen eine Krone in der Weise elastisch auf der Wurzel befestigt ist, daß zwischen einem mit der Wurzel verbundenen Stopfen und der Krone ein mit Elastomeren ausgefüllter Hohlraum geschaffen ist, vgl. die DE-OS 22 47 649. Eine stoßgedämpfte Anordnung, welche ohne die Einlagerung von elastischen Zwischenstücken oder Schichten auskommt, beschreibt die DE-OS 28 30 025. Die Dämpfung wird hier von einem die Suprastruktur aufnehmenden Aufsatzstück bewirkt, welches eine lippenförmig auslaufende Kippstütze aufweist, die sich am äußeren Rand eines Zwischenstückes dichtend abstützt.

Ein weiteres Dämpfungsglied aus physiologisch unbedenklichen polymeren mit einem Elastizitätsmodul zwischen 1000 und 5000 N/mm² beschreibt die DE-OS 28 24 214. Die bislang existierenden bzw. bekanntgewordenen Dämpfungsglieder bestehen im wesentlichen aus Kunststoffen, wie z.B. polyacrylat, polypropylen, polysulfon oder Polymetacrylat, vgl. die DE-OS 24 19 080, DE-OS 30 43 336, DE-AS 24 13 883, DE-OS 27 04 390 und DE-OS 28 24 118.

Im allgemeinen weisen Kunststoffe anfänglich zwar einen für die Dämpfungszwecke geeigneten Elastizitätsmodul auf ; jedoch ändert sich dieser sowie andere mechanische Eigenschaften durch die Dauerbeansprungung beim Kauvorgang in nachteiliger Weise. Nach einer bestimmten Anzahl von Lastspielen ermüden Kunststoffe sehr rasch, so daß die Dämpfungselemente schon nach relativ kurzen Zeiten bzw. nach einer niedrigen Lastspiel-Zahl ausgewechselt werden müssen. Die US-PS 3 722 094 trägt diesem Nachteil dadurch Rechnung, daß als Dämpfungselement zwischen Suprastruktur und Zahnwurzel eine Schraubenfeder eingesetzt wird. Die Anordnung weist jedoch neben konstruktiven Unzulänglichkeiten einen wesentlichen Nachteil auf, der darin besteht, daß bei Druckbelastung ein Spalt zwischen der Suprastruktur und dem Zahnwurzelimplantat entstehen kann. Es können dann Mundflüssigkeit sowie Speisereste in den die Schraubenfeder aufnehmenden Hohlraum eindringen. Schwerwiegende medinzinisch-hygienische probleme sind dadurch gegeben.

Eine den Stoß dämpfende Schraubenfeder im Innern eines hülsenförmigen Zahnwurzel-Implantats ist auch aus der US-PS 3 995 280 von welcher im ersten von Anspruch 1 ausgegangen wird, bekannt. Ein Suprastruktur-Lager ruht dabei auf einer aus nachgiebigem Vollmaterial bestehenden Füllung, die im unteren Hülsenbereich deponiert ist. Diese bekannte Anordnung weist weiterhin im Innenbereich des Implantats eine aus Kunststoff bestehende Umhüllung des Suprastruktur-pflocks auf. Eine den individuellen Bedürfnissen und Gegebenheiten bei den Patienten entsprechende Feinabstimmung der optimalen Dämpfungswerte ist mit dieser Implantat-Konstruktion nicht möglich. Darüber hinaus ist bei dem vorgesehenen Vollmaterial-Depot im Unterbereich der Implantat-Hülse nach einer gewissen Zeit mit Materialermüdungserscheinungen zu rechnen, die einem Dauereinsatz in situ entgegenstehen. Schließlich ist bei dieser bekannten Konstruktion das problem der Querstoß-Dämpfung nicht zufriedenstellend gelöst, weil keine formschlüssige pufferung des Suprastruktur-Lagers im Oberteil der Implantat-Hülse vorgesehen ist.

Abschließend ist noch auf die FR-A-2 385 384 hinzuweisen, die eine Vorrichtung zur Ausbildung eines

EP 0 267 926 B1

Zahnwurzelimplantats betrifft, das einen Rundkopfstift aufweist, wobei zwischen dem Rundkopfstift und der künstlichen Zahnwurzel eine elastisch verformbare Beschichtung vorgesehen ist, die als Dämpfungssystem dienen soll. Anstelle einer Elastomer-Beschichtung von Rundkopf und Stift kann auch eine elastische Umhüllung mit flüssigkeitsgefülltem, abgedichtetem Innenraum vorgesehen werden. Jedes Wurzelsystem besteht aus mehreren spitzen Elementen, die sich beim Implantieren in den Kieferknochen hineinbohren

Es ist die Aufgabe der vorliegenden Erfindung, ein konstruktiv einfaches, medizinisch jedoch hochwirksames Zahnwurzel-Implantat anzugeben, das die Nachteile der bekannten Implantate nicht aufweist und das auch bei langzeitlicher Dauerbelastung keine Lockerungserscheinungen in dem knöchernen Implantatlager aufweist. Eine weitere Teilaufgabe besteht darin, ein Zahnwurzel-Implantat für eine zweizeitige Implantation anzugeben, bei dem in wirksamer Weise das Eindringen von infektionsauslösenden Keimen in den Bereich des knöchernen Implantatlagers wie auch des Wurzelimplantates selbst ausgeschlossen wird.

Die Aufgabe wird bei einem Zahnwurzel-Implantat, das als Hülse ausgebildet ist, in deren Innenteil ein mindestens teilweise mit einer Kunststoff-Umhüllung versehenes Suprastruktur-Lager angeordnet ist, welches auf einem Dämpfungs-Organ aufsitzt, und einen Schraubverschluß aufweist, der den oberen Teil der Hülse abschließt, in erfindungsgemäßer Weise dadurch gelöst, daß das Dämpfungs-Organ eine membranförmige Druckplatte ist, welche zwischen dem Suprastruktur-Lager und einem der Auflage der Druckplatte dienenden Halterungsmittel gelagert ist, und daß der Schraubverschluß in Funktionsstellung den oberen Teil der Kunststoff-Umhüllung vorzugsweise unter Pressung derart umgibt, daß im Innenbereich des oberen Hülsenteils eine formschlüssige Kontaktierung der Kunststoff-Umhüllung einerseits mit dem Oberteil des Suprastruktur-Lagers und andererseits mit dem Schraubverschluß resultiert.

Die Halterungsmittel können als umlaufende Rampe oder als nach innen weisende radiale Zapfen oder als zylinderförmige Verdickungszone innerhalb der Hülse ausgebildet sein. Auch ist es möglich, daß das Halterungsmittel eine die Hülse in einen zur Suprastruktur weisenden oberen sowie in einen zum knöchernen Implantatlager weisenden unteren Bereich hermetisch abtrennende Zwischen-Membran ist. Dabei ist es zweckmäßig, daß die Druckplatte lose auf dem Halterungsmittel aufliegt. Das bzw. die Halterungsmittel selbst können in einer position innerhalb des Bereiches zwischen dem oberen Drittel und dem unteren Fünftel der Hülse angeordnet sein. Die Druckplatte ist als Rundscheibe ausgebildet, die vorzugsweise mit einer Mittellochung versehen sein kann. Es ist möglich, daß die Druckplatte zusätzlich in ihrem Randbereich einen Ringwulst – etwa nach Art eines Schlüsselrandes – aufweist. Zur individuellen Einstellung optimaler Dämpfungsmomente kann die Druckplatte eine Mehrzahl von Schlitzen aufweisen, die von der peripherie der Druckplatte zu deren Zentrum hin verlaufen, ohne den – gegebenenfalls mit einer Mittellochung versehenen – Zentralbereich der Druckplatte selbst zu erreichen. Es ist auch möglich, daß die Druckplatte anstelle einer Rundscheibe in der Weise ausgebildet ist, daß mindestens ein kreisabschnittsförmiges Plattensegment von der Ausgangs-Rundscheibe abgeschnitten wurde. Zur besseren Einstellung optimaler Schwingungsdämpfungs-Verhältnisse kann es zweckmäßig sein, die Druckplatte derart auszubilden, daß sie ein variables Querschnitts-Dickenprofil aufweist. Die Geometrie der Ober- und/oder Unterseite der Druckplatte kann eine plane oder sphärische oder asphärische Form haben

Das Suprastruktur-Lager weist in seinem Basisbereich eine zylinderförmige Querschnitts-Geometrie auf und in seinem zur Suprastruktur weisenden Bereich ist es stab- oder flaschenhalsförmig ausgebildet, wobei mindestens der zuletzt genannte Bereich mit einer Kunststoff-Umhüllung versehen ist. Dabei ist es zweckmäßig, daß der Basisbereich des Suprastruktur-Lagers formschlüssig in dem oberen Innenraum der Hülse gehaltert ist. Der sich nach oben hin verjüngende Bereich des Suprastruktur-Lagers ist als Gewindehals für die lösbare Befestigung der Suprastruktur ausgebildet. Zur Realisierung einer zweizeitigen Implantationstechnik weist die Hülse in ihrem oberen Bereich ein Innengewinde zur temporären Aufnahme eines Hülsenverschlusses auf. Der zum knöchernen Implantatlager weisende Teil der Hülse kann ein einsetzbares Abschluß-Teil aufweisen, das vorzugsweise mindestens eine Ausnehmung für das Einsetzen eines Eindreh-Werkzeuges (Inbus-Schlüssel) aufweist. Das Abschluß-Teil kann auch ohne Gewinde im Preßsitz in der Hülse gehaltert sein. Es ist hingegen auch möglich, das Abschluß-Teil mit einem Gewinde zu versehen, das mit einem entsprechenden Innengewinde im unteren Hülsen-Teil korrespondiert. Außerdem kann zur Erleichterung des Eindrehens des Abschluß-Teils eine Ausnehmung für das Ansetzen eines Inbus-Schlüssels vorgesehen sein. Das Abschluß-Teil weist zweckmäßigerweise eine abgerundete Außenkontur auf. Die Hülse, die in ihrem Innenbereich eine Zwischen-Membran aufweist, kann in ihrem unteren Bereich mit einem elastischen Kunststoffmaterial ausgefüllt sein. Auch ist es möglich, daß dieser untere Bereich eine vorgespannte Schraubenfeder aufweist, die einerseits an der Unterseite der Zwischen-Membran und andererseits an dem Abschluß-Teil anliegt. Anstelle einer Schraubenfeder kann auch ein unter Vorspannung stehender Biegestab vorgesehen sein. Es ist zweckmäßig, das erfindungsgemäße Zahnwurzel-Implantat derart auszubilden, daß das Suprastruktur-Lager mindestens eine Abflachungs-Fläche als Verdrehsicherung aufweist, die mit einer entsprechenden Verdickungszone im Innenbereich des oberen Teils der Hülse korrespondiert. Darüber hinaus ist es

3

ebenfalls möglich, als Verdrehsicherung für das Suprastruktur-Lager eine an der Innenwandung der Hülse parallel zu ihrer Vertikalachse verlaufende Stift- oder Schienenführung vorzusehen, die mit einer Ausnehmung im Suprastruktur-Lager korrespondiert.

Nach einer besonderen vorteilhaften Ausführungsform der vorliegenden Erfindung kann die Hülse, der Schraubverschluß und – gegebenenfalls – das Abschluß-Teil aus körperverträglichem metallischen Material, vorzugsweise aus Titan oder einer Titan-Legierung bestehen. Die Druckplatte und das Suprastruktur-Lager bestehen zweckmäßigerweise aus dauerschwingfestem Metall, vorzugsweise aus Feder-Stahl. Die Hülse und das Abschluß-Teil weist nach inner bevorzugten Ausführungsform der vorliegenden Erfindung eine Partial- oder Totalbeschichtung mit bioaktivem Material auf. Dabei kann das Material ein Verbundwerkstoff sein, der durch isostatisches bzw. heiß-isostatisches Pressen eines anorganischen bioaktiven Ausgangsmaterials und eines körperverträglichen Metallpulvers – vorzugsweise eines Titan- bzw. Titanlegierungs-Pulvers – hergestellt wurde. Es ist indes ebenfalls möglich, daß die Hülse bzw. das Abschluß-Teil an diskreten Oberflächenbereichen Einlagerungen von bioaktivierten, durch isostatisches bzw. heiß-isostatisches Pressen erhaltenen Verbundwerkstöffen aufweist, wobei die kraft- und formschlüssige Verankerung der einzelnen Verbundwerkstoff-Körper unter nochmaligem heiß-isostatischen Pressen erfolgt. Die Oberflächen-Geometrien mit diesen diskreten Einlagerungen können dabei sehr vielgestaltig sein ; vorzugsweise wird es sich jedoch um kreisförmige Einlagerungen handeln. Das erfindungsgemäße Zahnwurzel-Implantat kann zur Aufnahme einer Suprastruktur verwendet werden bzw. als Einzelpfeiler für die Verankerung dentalprothetischer Brückenkonstruktionen vorgesehen sein.

Die Erfindung wird nachfolgend anhand von Zeichnungen in schematischer Darstellung erläutert. Es zeigen :

Fig. 1 : eine erste Ausführungsform des Zahnwurzel-Implantates mit einer losen, planen Druckplatte ;

Fig. 2 : eine zweite Ausführungsform des Zahnwurzel-Implantates mit einer Zwischen-Membran, auf der eine Druckplatte aufliegt ;

Fig. 3 : eine dritte Ausführungsform des Zahnwurzel-Implantates mit einer Zwischen-Membran, die im unteren Bereich durch eine Feder abgestützt ist ;

Fig. 4 : eine vierte Ausführungsform des Zahnwurzel-Implantates mit einer zum knöchernen Implantatlager weisenden offenen Hülsenform ;

Fig. 5 : eine ausschnittsweise Darstellung einer fünften Ausführungsform eines Zahnwurzel-Implantates mit einem Biegestab als Unterstützung für die Zwischen-Membran ;

Fig. 6 : eine Detaildarstellung eines unteren Teiles eines Zahnwurzel-Implantates mit einer Vielzahl von Einlagerungen bioaktiver Partikel ;

Fig. 7a : eine ausschnittsweise Darstellung einer weiteren Ausführungsform einer Zahnwurzel-Implantat-Hülse mit einer inneren zlinderförmigen Verdickungszone ;

Fig. 7b : eine Draufsicht auf die in Fig. 7a dargestellte kreisförmige Druckplatte ;

Fig. 8a : eine weitere Variante der Zahnwurzel-Implantat-Hülse mit einer in ihrem Inneren umlaufenden Rampe 6c ;

Fig. 8b : einen Schnitt längs der Linie A-A von Fig. 8a ;

Fig. 9a : eine weitere Variante einer Zahnwurzel-Implantat-Hülse mit in ihrem Inneren vorgesehenen radialen Zapfen als Halterungsmittel für die Druckplatte ;

Fig. 9b : eine Draufsicht auf die in Fig. 9a dargestellte Druckplatte mit vier Halterungsmitteln (radiale Zapfen) ;

Fig. 10a : eine ausschnittsweise Darstellung einer Hülse gemäß Fig. 7a, jedoch mit einer anderen Druckplatten-Form ;

Fig. 10b : die in Fig. 10a dargestellte Druckplatte in Draufsicht mit Schlitzen und Mittellochung ;

Fig. 11a : einen Querschnitt durch eine Zahnwurzel-Implantat-Hülse, die eine ebene Fertigungszone im Innenbereich der Hülse aufweist, welche mit einer entsprechenden Abflachungs-Fläche des Suprastrukturlagers korrespondiert ;

Fig. 11b : das in Fig. 11a Dargestellte, jedoch mit symmetrisch angeordneten Verdickungszonen bzw. Abflachungs-Flächen ;

Fig. 12a : einen Schnitt durch eine Zahnwurzel-Implantat-Hülse mit einer Stiftführung als Verdrehsicherung im Innenbereich der Hülse.

Fig. 12b : eine Kombination des in den Fig. 11a und 12a Dargestellten ;

Fig. 13 : ein Zahnwurzel-Implantat in situ mit einem zeitweiligen Hülsenverschluß (erste Phase einer zweizeitigen Implantationstechnik) ;

Fig. 14 : graphische Darstellung der Nachgiebigkeit von fünf planparallelen Druckplatten unterschiedlicher Plattenstärke in Abhängigkeit von der Druckkraft.

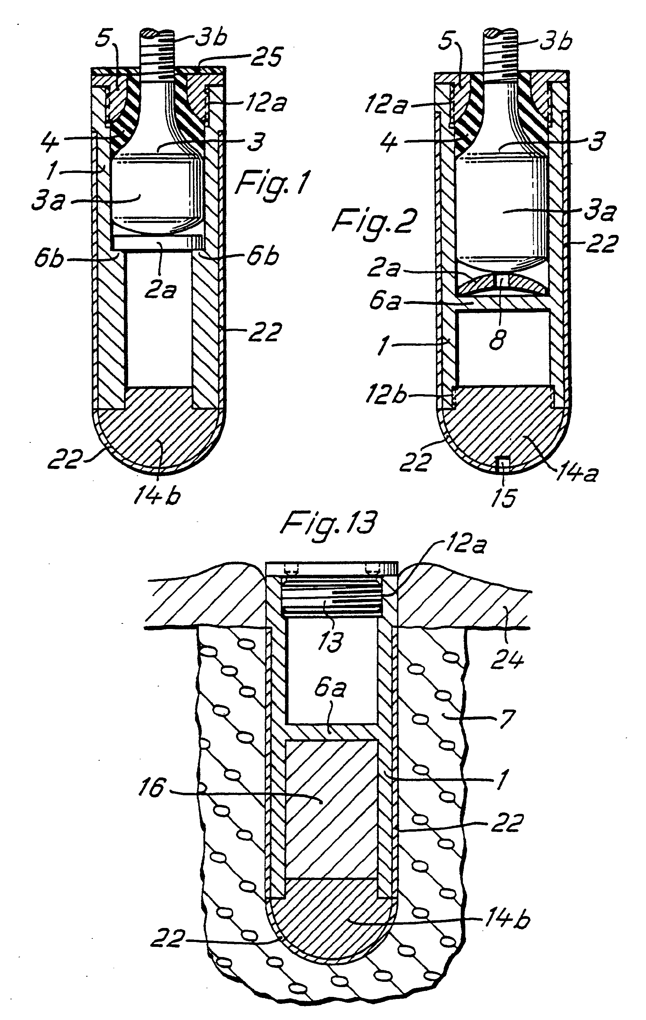

In Fig. 1 ist ein Zahnwurzel-Implantat dargestellt, das aus einer metallischen Hülse 1 ausgebildet ist, die in ihrem Innenbereich eine Druckplatte enthält, die im dargestellten Fall als planparallele Rundscheibe 2a ausgebildet ist. Die Druckplatte liegt frei auf einer zylinderförmigen Verdickungszone 6b im Innern der Hülse 1 auf. Auf der Druckplatte 2a sitzt ein Suprastruktur-Lager 3 auf, das aus einem zylindrischen Basisbereich 3a und einem stab- oder flaschenhalsförmigen Bereich 3b besteht, wobei der Teil 3b ein Gewinde zur Aufnahme einer nicht mit dargestellten Suprastruktur aufweist. Das Suprastruktur-Lager 3 weist in Fig. 1 im Bereich seines oberen Teils eine Kunststoff-Umhüllung 4 auf. Ein Schraubverschluß 5 schließt das Zahnwurzel-Implantat ab. Dieser Verschluß 5 ist derart geformt, daß er vollflächig an der Kunststoff-Umhüllung 4 anliegt. Es ist dabei wünschenswert, daß er einen gewissen Preßdruck auf die Kunststoff-Umhüllung 4 ausübt. Die Hülse wird in ihrem unteren Teil von einem einsetzbaren Abschluß-Teil 14b verschlossen. Die Hülse wie auch das Abschluß-Teil 14b können eine Partial- oder Totalbeschichtung aus bioaktivem Material 22 aufweisen. Der Schraubverschluß 5 trägt ein Gewinde, das mit einem entsprechenden Innengewinde 12a im oberen Bereich der Hülse 1 korrespondiert. Oberhalb des Schraubverschlusses 5 befindet sich noch ein Dichtungsring 25 aus elastischem Material. Das Suprastruktur-Lager 3 ist in seinem zur Druckplatte 2a weisenden Bereich derart gestaltet, daß es nur eine geringe Kontaktfläche zur Druckplatte 2a – vorzugsweise nur einen Punktkontakt – aufweist.

In Fig. 2 weist die Hülse 1 in ihrem Innenbereich ein als Zwischen-Membran 6a ausgebildetes Halterungsmittel auf, welches die Hülse 1 hermetisch in einen oberen und einen unteren Bereich abschließt. Auf dieser Zwischen-Membran 6a liegt – wiederum frei beweglich – eine anders geformte Druckplatte 2a auf, die eine Mittellochung 8 zur muldenförmigen Aufnahme der Suprastruktur 3 aufweist. Der Abschluß-Teil 14a ist in dieser Darstellung mit einem Gewinde versehen, welches mit einem Innengewinde 12b im unteren Bereich der Hülse 1 korrespondiert. Außerdem ist eine Ausnehmung 15 für ein Drehwerkzeug vorgesehen. Die Form des Suprastruktur-Lagers 3 kann individuell gestaltet werden ; es muß jedenfalls ein zylindrischer Bereich 3a vorhanden sein, welcher formschlüssig an der Innenwandung der Hülse 1 anliegt. Ebenso kann der sich verjüngende Bereich 3b des Suprastruktur-Lagers 3a unterschiedlich ausgebildet sein ; in jedem Fall muß aber auch hier der Raum zwischen dem sich verjüngenden Bereich 3b und dem oberen Teil der Hülse 1 bzw. dem konischen Teil des Schraubverschlusses 5 vollständig mit der Kunststoff-Umhüllung 4 ausgefüllt sein.

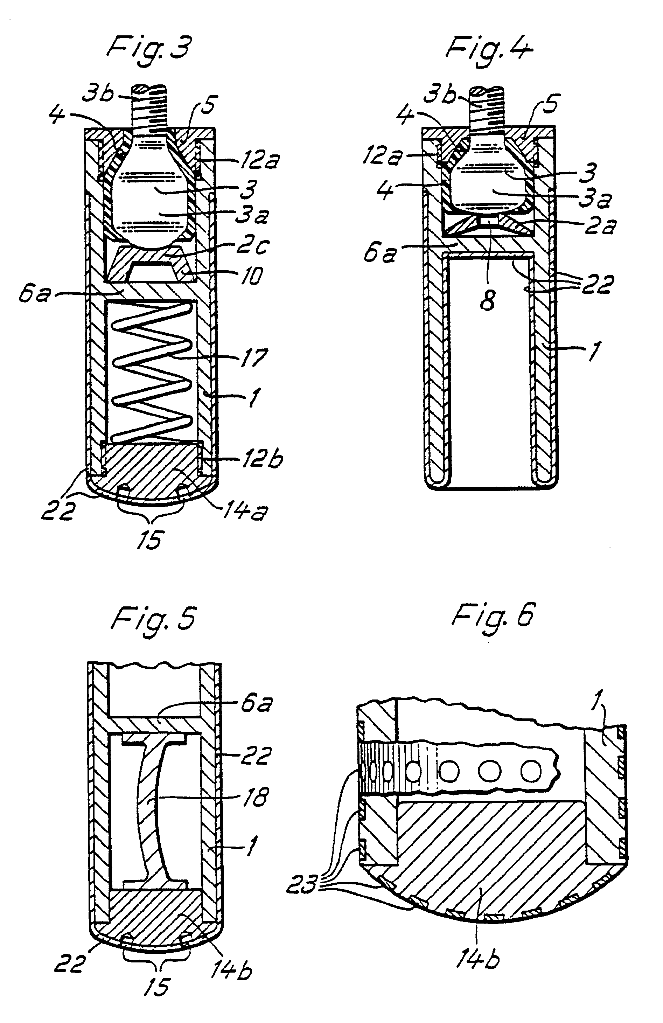

In Fig. 3 ist eine weitere Variante dargestellt, wobei die Zwischen-Membran 6a durch eine Schraubenfeder 17, die den unteren Hülsenbereich zwischen dem einschraubbaren Abschluß-Teil 14a und der Unterseite der Zwischen-Membran 6a unter Vorspannung ausfüllt, elastisch unterstützt wird. Als Druckplatte ist eine topfförmige Druckplatte 2c mit Ringwulst 10 dargestellt. In einer muldenförmigen Vertiefung liegt das Suprastruktur-Lager 3 auf, welches – mit Ausnahme des Auflage-Bereiches auf der Druckplatte 2c – vollständig mit einer Kunststoff-Umhüllung 4 versehen ist.

In Fig. 4 wird eine weitere Zahnwurzel-Implantat-Hülse 1 dargestellt. Sie ist im zum knöchernen Implantatlager 7 weisenden Bereich als offene Hülse 1 ausgebildet, wobei sie auch in ihrer Innenwandung mit einer Beschichtung aus einem bioaktiven Material 22 versehen ist. Auf der Zwischen-Membran 6a sitzt eine Druckplatte 2a mit Mittellochung 8 auf. Es ist hervorzuheben, daß die Halterungsmittel 6a-6d in unterschiedlicher Höhe innerhalb der Hülse 1 angebracht werden können, vgl. beispielsweise die entsprechende Anordnung in Fig. 2 (unterer Hülsenbereich) und in Fig. 4 (oberer Hülsenbereich).

Die Fig. 5 zeigt eine ausschnittsweise Darstellung einer weiteren Variante einer abstützenden Konstruktion der Zwischen-Membran 6a, und zwar einen unter Vorspannung stehenden Biegestab 18. Natürlich sind diverse andere konstruktive Möglichkeiten denkbar.

Die Detaildarstellung in Fig. 6 verdeutlicht die partielle Einlagerung von vorgefertigten, aus bioaktivem Material bestehenden Einlagerungskörpern 23 im Oberflächenbereich der Hülse 1 bzw. des Abschluß-Teils 14b. Diese Einlagerungen 23 können beispielsweise aus einem Verbundwerkstoff bestehen, der aus einer metallischen Komponente und mindestens einem bioaktiven Werkstoff mittels eines isostatischen Preßverfahrens hegestellt wurde. Die so vorgefertigten bioaktiven Einlagerungen 23 können in die entsprechend ausgeführten Ausnehmungen paßgenau eingesetzt werden und sodann einem nochmaligen isostatischen Preßvorgang unterzogen werden, wobei es zu einer festen "Verschweißung" mit den vorgesehenen Ausnehmungen kommt. Mit dieser Technik wird die aus bioinertem metallischen Material gefertigte Zahnwurzel-Implantat-Hülse 1 gewissermaßen nachträglich "bioaktiviert".

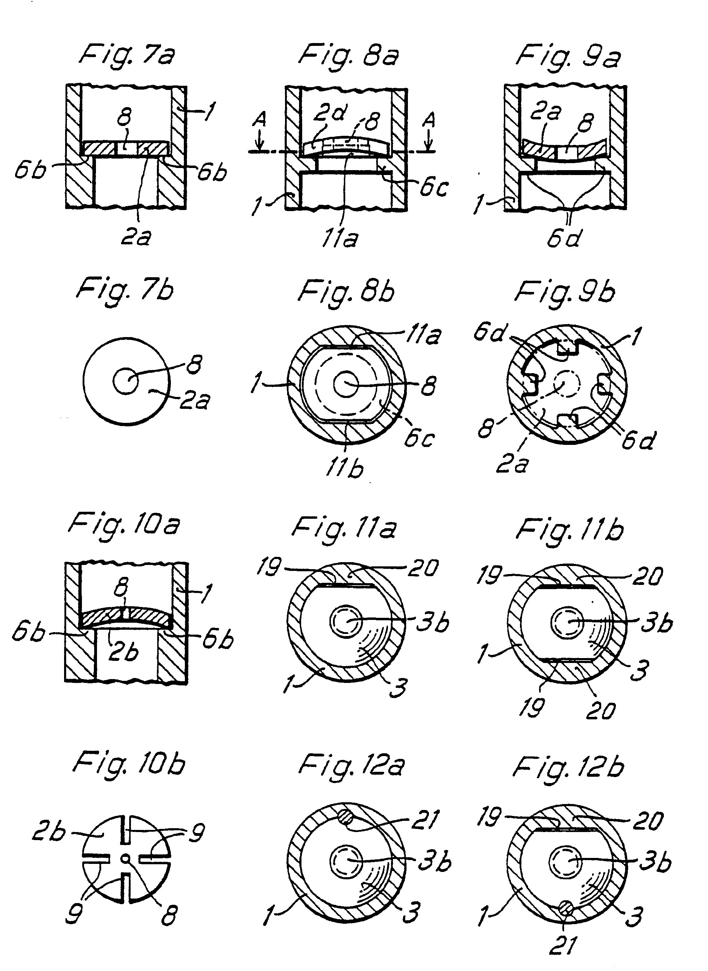

Die geometrische Formgebung der Druckplatte sowie die konstruktive Ausgestaltung der Halterungsmittel im Innenbereich der Hülse 1 kann vielgestaltig sein. In Fig. 7a ist die Druckplatte als planparallele Rundscheibe 2a mit Mittellochung 8 dargestellt, vgl. auch die entsprechende Draufsicht in Fig. 7b.

Wie Fig. 8a zeigt, kann das Halterungsmittel auch als umlaufende Rampe 6c ausgebildet sein, auf der sich eine Druckplatte 2d mit Mittellochung 8 abstützt, vgl. den in Fig. 8b dargestellten Schnitt entlang der Linie A-A.

In Fig. 9a sind anstelle einer umlaufenden Rampe radiale Zapfen 6d im Innenbereich der Hülse 1 angeordnet, die eine sichere Auflage der Druckplatte 2a gewährleisten, welche im vorliegenden Fall als durchbogene Scheibe ausgebildet ist.

Die Druckplatte kann auch mit mehreren Schlitzen 9 versehen sein, die peripher angeordnet sind und in Richtung Plattenmittelpunkt verlaufen. Hierdurch kann eine gezielte Einstellung des Federungs-Vermögens der Druckplatte 2b erreicht werden. Die Druckplatte kann auch aus einer Rundscheibe 2a, vgl. Fig. 7b, in der Weise modifizierend formgestaltet werden, daß beispielsweise zwei kreisabschnittsförmige Plattensegmente 11a, 11b von ihr abgetrennt werden, vgl. Fig. 8b. Diverse weitere Trimmungen sind möglich.

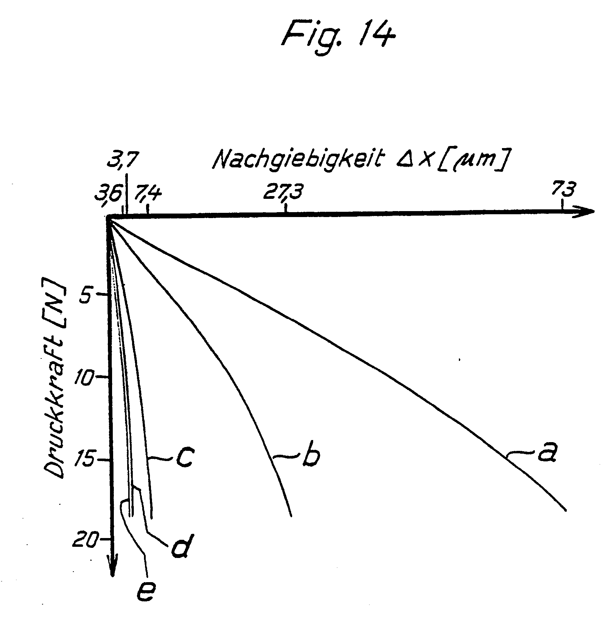

In Fig. 11a ist ein Schnitt durch eine besondere Ausführungsform einer Zahnwurzel-Implantat-Hülse 1 gezeichnet, wobei im Innenbereich der Hülse 1 eine Verdickungszone 20, die parallel zur Hülsenachse verläuft, vorgesehen ist. In entsprechender Weise weist das einzusetzende Suprastruktur-Lager 3 in seinem zylindrischen Basisbereich 3a eine Abflachungs-Fläche 19 auf. Hierdurch ist eine Verdreh-Sicherung gewährleistet. Dies ist besonders deshalb von Vorteil, weil die erfindungsgemäße Vorrichtung derart konzipiert ist, daß nicht nur die Suprastruktur, sondern auch das Suprastruktur-Lager 3 bzw. die Druckplatte 2a-2d austauschbar gehaltert sind. Wie Fig. 11b zeigt, können auch mehrere Verdickungszonen 20 im Innenbereich der Hülse 1 bzw. Abflachungs-Flächen am Suprastruktur-Lager 3 vorgesehen sein, Schließlich ist es auch möglich, eine Stift- oder Schienenführung 21 im Innenbereich der Hülse 1 parallel zur Hülsenachse anzuordnen, die mit einer entsprechenden Längsnut im Basisbereich 3a des Suprastruktur-Lagers 3 korrespondiert. In Fig. 12b ist eine Kombination beider Lösungsvorschläge (Fig. 11a + Fig. 12a) dargestellt.

Fig. 13 zeigt ein im Implantatlager 7 verankertes Zahnwurzel-Implantat. Im gesamten Bereich des Außenmantels der Hülse 1 sowie des Abschluß-Teils 14b ist eine Beschichtung aus bioaktivem Material aufgetragen. Im Bereich des Zahnfleisches 24 grenzt die aus körperverträglichem Metall bestehende Hülse direkt an das Körpergewebe heran. Unterhalb der Zwischen-Membran 6a ist als elastischer Federungskörper ein den unteren Hülsenbereich komplett ausfüllendes Kunststoffmaterial 16 eingesetzt. Zur Realisierung einer zweizeitigen Implantationstechnik wird das Zahnwurzel-Implantat – zunächst ohne Suprastruktur-Lager und Druckplatte – eingepflanzt und sodann mit einem Hülsenverschluß 3 versehen. Nach der Einwachs- bzw. Anwachs-Phase wird der Hülsenverschluß 13 wieder entfernt, die Druckplatte, das Suprastruktur-Lager sowie der Schraubverschluß eingepaßt, der Dichtungsring 25 aufgelegt und schließlich die eigentliche Suprastruktur im oberen Bereich 3b des Suprastruktur-Lagers 3 befestigt. Damit ist dann die zweite Phase des zweizeitigen Implantationsverfahrens abgeschlossen. Durch die konstruktive Ausgestaltung ist es gewährleistet, daß keine Hohlräume im oberen Bereich des Zahnwurzel-Implantates auftreten, in welche ansonsten Mundflüssigkeit eindringen könnte. Die das Suprastruktur-Lager 3 umgebende Kunststoff-Umhüllung 4 erfüllt im wesentlichen Dichtungsaufgaben und dient nicht – wie bei vielen anderen Zahnwurzel-Implantaten – der Obertragung der beim Kauen in senkrechter Richtung auftretenden Kaukräfte. Diese Kräfte werden hier zunächst von der Druckplatte aufgenommen, durch die sie gedämpft und dann über die Implantataußenhülle an den Kieferknochen abgeleitet werden. Durch diese Kräfteableitungen wird das Luxieren und Lockern von Zahnwurzel-Implantaten verhindert. Negative Reizwirkungen auf den Knochen werden ausgeschaltet und der bei Belastung auftretende Abstossungseffekt als Abwehrreaktion vermieden. Das Suprastruktur-Lager 3, insbesondere dessen oberer Bereich 3b, kann die beim Kauen auftretenden Querkräfte aufnehmen und weiterleiten, so daß die umgebende Kunststoff-Umhüllung 4 nicht die Hauptdämpfung der Kräfte übernehmen muß.

Von besonderer Bedeutung ist die Tatsache, daß das erfindungsgemäße Zahnwurzel-Implantat nicht ohne die lose eingefügte Druckplatte 2a-2d seine volle Funktion ausüben kann ; das Vorhandensein dieser lose aufliegenden Druckplatte ist daher ein essentielles Merkmal. Messungen an derartigen Modellimplantaten haben gezeigt, daß frei auf einem Halterungsmittel aufliegende Druckplatten für das beste Abfangen bzw. Weiterleiten von Druck-Spitzenbelastungen geeignet sind. In Fig. 14 sind planparallele Rundscheiben 2a unterschiedlicher Dicke bezüglich ihrer Nachgiebigkeit bei Anwendung definierter Druckkräfte graphisch dargestellt worden. Eine Rundscheibe 2a mit einem Durchmesser zwischen 2,5-2,8 mm zeigt in Abhängigkeit der jeweiligen Plattendicke folgende Nachgiebigkeit $\Delta x$ :

| Bezugs-zeichen | Plattendicke [ mm ] | $\Delta x$ [μm ] |
|---|---|---|
| a | 0,1 | 73 |
| b | 0,2 | 27,3 |
| c | 0,3 | 7,4 |
| d | 0,4 | 3,7 |
| e | 0,5 | 3,6 |

Es sei betont, daß durch die aufgezeigten unterschiedlichen Strukturierungen, Dicken, Schlitze, usw.

6

diverse gezielte Eigenschaftsänderungen für die Druckplatte – je nach Anwendungsbereich des Implantates – vorgenommen werden können.

## Ansprüche

1. Zahnwurzel-Implantat, das als Hülse ausgebildet ist, in deren Innenteil ein mindestens teilweise mit einer Kunststoff-Umhüllung versehenes Suprastruktur-Lager angeordnet ist, welches auf einem Dämpfungs-Organ aufsitzt, und das einen Schraubverschluß aufweist, der den oberen Teil der Hülse abschließt, **dadurch gekennzeichnet**, daß das Dämpfungs-Organ eine membranförmige Druckplatte (2c-2d) ist, welche zwischen dem Suprastruktur-Lager (3) und einem der Auflage der Druckplatte (2a-2d) dienenden Halterungsmittel (6a-6d) gelagert ist, und daß der Schraubverschluß (5) in Funktionsstellung den oberen Teil der Kunststoff-Umhüllung (4) vorzugsweise unter Pressung derart umgibt, daß im Innenbereich des oberen Teils der Hülse (1) eine formschlüssige Kontaktierung der Kunststoff-Umhüllung (4) einerseits mit dem Oberteil des Suprastruktur-Lagers (3) und andererseits mit dem Schraubverschluß (5) resultiert.

2. Implantat nach Anspruch 1, **dadurch gekennzeichnet**, daß das Halterungsmittel als umlaufende Rampe (6c) ausgebildet ist.

3. Implantat nach Anspruch 1, **dadurch gekennzeichnet**, daß das Halterungsmittel mindestens drei nach innen weisende radiale Zapfen (6d) umfaßt.

4. Implantat nach Anspruch 1, **dadurch gekennzeichnet**, daß das Halterungsmittel das Oberteil einer zylinderförmigen Verdickungszone (6b) innerhalb der Hülse (1) ist.

5. Implantat nach Anspruch 1, **dadurch gekennzeichnet**, daß das Halterungsmittel eine die Hülse (1) in einen zur Suprastruktur weisenden oberen sowie in einen zum knöchernen Implantatlager (7) weisenden unteren Bereich hermetisch abtrennende Zwischen-Membran (6a) ist.

6. Implantat nach mindestens einem der vorhergehenden Ansprüche, **dadurch gekennzeichnet**, daß die Druckplatte (2a-2d) lose auf dem Halterungsmittel (6a-6d) aufliegt.

7. Implantat nach mindestens einem der vorhergehenden Ansprüche, **dadurch gekennzeichnet**, daß das Halterungsmittel (6a-6d) für die Druckplatte (2a-2d) in einer Position innerhalb des Bereiches zwischen dem oberen Drittel und dem unteren Fünftel der Hülse (1) angeordnet ist.

8. Implantat nach Anspruch 1, **dadurch gekennzeichnet**, daß die Druckplatte als Rundscheibe (2a) – vorzugsweise mit einer Mittellochung (8) – ausgebildet ist.

9. Implantat nach Anspruch 8, **dadurch gekennzeichnet**, daß die Druckplatte (2c) als Rundscheibe (2a) ausgebildet ist, die zusätzlich in ihrem Randbereich einen Ringwulst (10) aufweist.

10. Implantat nach einem der Ansprüche 8 und 9, **dadurch gekennzeichnet**, daß die Druckplatte (2a-2d) eine Mehrzahl von Schlitzen (9) aufweist, die von der peripherie der Druckplatte (2b) zu deren Zentrum hin verlaufen, ohne den – gegebenenfalls mit einer Mittellochung (8) versehenen – Zentralbereich der Druckplatte (2b) selbst zu erreichen.

11. Implantat nach mindestens einem der Ansprüche 1 und 8 bis 10, **dadurch gekennzeichnet**, daß die Druckplatte (2d) durch Entfernen mindestens eines kreisabschnittsförmigen Plattensegmentes (11a, 11b) gebildet ist.

12. Implantat nach mindestens einem der Ansprüche 1 und 8 bis 11, **dadurch gekennzeichnet**, daß die Druckplatte (2a-2d) ein variables Querschnitts-Dickenprofil aufweist.

13. Implantat nach mindestens einem der Ansprüche 1 und 8 bis 12, **dadurch gekennzeichnet**, daß die Ober- und Unterseite der Druckplatte (2a-2d) jeweils eine plane und/oder sphärische und/oder asphärische Form aufweist.

14. Implantat nach Anspruch 1, **dadurch gekennzeichnet**, daß das Suprastruktur-Lager (3) in seinem Basisbereich (3a) eine zylinderförmige Querschnitts-Geometrie aufweist und in seinem zur Suprastruktur weisenden Bereich (3b) stab-oder flaschenhalsförmig ausgebildet ist, wobei mindestens der zuletzt genannte Bereich mit einer Kunststoff-Umhüllung (4) versehen ist.

15. Implantat nach Anspruch 14, **dadurch gekennzeichnet**, daß der Basisbereich (3a) des Suprastruktur-Lagers (3) formschlüssig in dem oberen Innenraum der Hülse (1) gehaltert ist.

16. Implantat nach einem der Ansprüche 14 und 15, **dadurch gekennzeichnet**, daß der sich nach oben verjüngende Bereich (3b) des Suprastruktur-Lagers (3) als Gewindehals für die lösbare Befestigung der Suprastruktur ausgebildet ist.

17. Implantat nach Anspruch 1, **dadurch gekennzeichnet**, daß die Hülse (1) zur Realisierung einer zweizeitigen Implantationstechnik in ihrem oberen Bereich ein Innengewinde (12a) zur temporären Aufnahme eines Hülsenverschlusses (13) aufweist.

18. Implantat nach Anspruch 1, **dadurch gekennzeichnet**, daß der zum knöchernen Implantatlager (7) weisende Teil der Hülse ein einsetzbares Abschluß-Teil (14a ; 14b) aufweist, das vorzugsweise mindestens eine Ausnehmung (15) für das Einsetzen eines Inbus-Schlüssels aufweist.

19. Implantat nach Anspruch 18, **dadurch gekennzeichnet,** daß das Abschluß-Teil (14b) im preßsitz in der Hülse (1) gehaltert ist.

20. Implantat nach Anspruch 18, **dadurch gekennzeichnet,** daß das Abschluß-Teil (14a) ein Gewinde aufweist, das mit einem entsprechenden Innengewinde (12b) im unteren Hülsen-Teil korrespondiert, und außerdem mindestens eine Ausnehmung (15) für das Ansetzen eines Inbus-Schlüssels enthält.

21. Implantat nach einem der Ansprüche 18 bis 20, **dadurch gekennzeichnet,** daß das Abschluß-Teil (14a ; 14b) eine abgerundete Außenkontur aufweist.

22. Implantat nach den Ansprüchen 5 und 18, **dadurch gekennzeichnet,** daß der untere Bereich der Hülse (1) mit einem elastischen Kunststoffmaterial (16) ausgefüllt ist.

23. Implantat nach den Ansprüchen 5 und 18, **dadurch gekennzeichnet,** daß der untere Bereich eine vorgespannte Schraubenfeder (17) aufweist, die einerseits an der Unterseite der Zwischen-Membran (6a) und andererseits an dem Abschluß-Teil (14a ; 14b) anliegt.

24. Implantat nach Anspruch 23, **dadurch gekennzeichnet,** daß anstelle der Schraubenfeder (17) ein unter Vorspannung stehender Biegestab (18) vorgesehen ist.

25. Implantat nach Anspruch 1, **dadurch gekennzeichnet,** daß das Suprastruktur-Lager (3) in Draufsicht mindestens eine Abflachungs-Fläche (19) als Verdrehsicherung aufweist, die mit einer entsprechenden Verdickungszone (20) im Innenbereich der Hülse (1) korrespondiert.

26. Implantat nach Anspruch 1, **dadurch gekennzeichnet,** daß als Verdrehsicherung für das Suprastruktur-Lager (3) eine an der Innenwandung der Hülse (1) parallel zu ihrer Vertikalachse verlaufende Stift- oder Schienenführung (21) vorgesehen ist, die mit einer entsprechenden Ausnehmung im Suprastruktur-Lager (3) korrespondiert.

27. Implantat nach mindestens einem der vorhergehenden Ansprüche, **dadurch gekennzeichnet,** daß die Hülse (1), der Schraubverschluß (5) und – gegebenenfalls – das Abschluß-Teil (14a ; 14b) aus körperverträglichem metallischen Material, vorzugsweise aus Titan oder einer Titan-Legierung, besteht.

28. Implantat nach mindestens einem der vorhergehenden Ansprüche, **dadurch gekennzeichnet,** daß die Druckplatte (2a-2d) und das Suprastruktur-Lager (3) aus dauerschwingfestem Material – vorzugsweise aus Feder-Stahl – bestehen.

29. Implantat nach mindestens einem der vorhergehenden Ansprüche, **dadurch gekennzeichnet,** daß die Hülse (1) und das Abschluß-Teil (14a ; 14b) eine Partial- oder Totalbeschichtung (23 oder 22) mit bioaktivem Material aufweist.

30. Implantat nach Anspruch 29, **dadurch gekennzeichnet,** daß das Material ein Verbundwerkstoff ist, der durch isostatisches – vorzugsweise heiß-isostatisches – pressen eines anorganischen bioaktiven Ausgangsmaterials und eines körperverträglichen Metallpulvers – vorzugsweise eines Titan- bzw. Titanlegierungspulvers – hergestellt wurde.

31. Implantat nach Anspruch 29 und 30, **dadurch gekennzeichnet,** daß die Hülse (1) bzw. das Abschluß-Teil (14a ; 14b) an diskreten Oberflächenbereichen Einlagerungen (23) von bioaktivierten, durch isostatisches bzw. heiß-isostatisches pressen erhaltenen Verbundwerkstoffen aufweist, wobei die kraft- und formschlüssige Verankerung der einzelnen Verbundwerkstoff-Körper (23) unter nochmaligem heiß-isostatischen pressen erfolgt.

## Claims

1. Tooth root implant which is constructed as sleeve, in the inner part of which a superstructure bearing is arranged, which is provided at least partially with a synthetic material sheathing and sits on a damping organ, and which displays a screw closure closing off the upper part of the sleeve, characterised thereby, that the damping organ is a diaphragm-shaped pressure plate (2c to 2d), which is borne between the superstructure bearing (3) and a mounting means (6a to 6d) serving as seating of the pressure plate (2a to 2d), and that the screw closure (5) in functional setting surrounds the upper part of the synthetic material sheathing (4) preferably under pressure in such a manner that a shape-locking contact of the synthetic material sheathing (4) on the one hand with the upper part of the superstructure bearing (3) and on the other hand with the screw closure (5) results in the inner region of the upper part of the sleeve (1).

2. Implant according to claim 1, characterised thereby, that the mounting means is constructed as encircling ramp (6c).

3. Implant according to claim 1, characterised thereby, that the mounting means comprises at least three radial spigots (6d) pointing inwardly.

4. Implant according to claim 1, characterised thereby, that the mounting means is the upper part of a cylindrical thickening zone (6b) within the sleeve (1).

5. Implant according to claim 1, characterised thereby, that the mounting means is an intermediate diaphragm (6a) hermetically severing the sleeve (1) into an upper region pointing to the superstructure and a lower region pointing to the bony implant bearing (7).

6. Implant according to at least one of the preceding claims, characterised thereby, that the pressure plate (2a to 2d) lies loosely on the mounting means (6a to 6d)

7. Implant according to at least one of the preceding claims, characterised thereby, that the mounting means (6a to 6d) for the pressure plate (2a to 2d) is arranged in a position within the region between the upper third and the lower fifth of the sleeve (1).

8. Implant according to claim 1, characterised thereby, that the pressure plate is constructed as round disc (2a), preferably with a central perforation (8).

9. Implant according to claim 8, characterised thereby, that the pressure plate (2c) is constructed as round disc (2a) which additionally displays an annular bead (10) in its rim region.

10. Implant according to one of the claims 8 and 9, characterised thereby, that the pressure plate (2a to 2d) displays a plurality of slots (9), which extend from the periphery of the pressure plate (2b) towards its centre without reaching the central region, which is in a given case provided with a central perforation, of the pressure plate (2b) itself.

11. Implant according to at least one of the claims 1 and 8 to 10, characterised thereby, that the pressure plate (2d) is formed by removal of at least one segment-shaped plate segment (11a, 11b).

12. Implant according to at least one of the claims 1 and 8 to 11, characterised thereby, that the pressure plate (2a to 2d) displays a variable cross-sectional thickness profile.

13. Implant according to at least one of the claims 1 and 8 to 12, characterised thereby, that the upper side and the underside of the pressure plate (2a to 2d) each display a planar and/or spherical and/or aspherical shape.

14. Implant according to claim 1, characterised thereby, that the superstructure bearing (3) displays a cylindrical cross-sectional geometry in its base region (3a) and is constructed to be rod-shaped or bottleneck-shaped in its region (3b) pointing to the superstructure, wherein at least the last-mentioned region is provided with a synthetic material sheathing (4).

15. Implant according to claim 14, characterised thereby, that the base region (3a) of the superstructure bearing (3) is mounted shapelockingly in the upper interior space of the sleeve (1).

16. Implant according to one of the claims 14 and 15, characterised thereby, that the upwardly narrowing region (3b) of the superstructure bearing (3) is constructed as threaded neck for the detachable fastening of the superstructure.

17. Implant according to claim 1, characterised thereby, that the sleeve (1) in its upper region displays an internal thread (12a) for temporary reception of a sleeve closure (13) for the realisation of a two-stage implantation technique.

18. Implant according to claim 1, characterised thereby, that that part of the sleeve, which points to the bony implant bearing (7), displays an insertable closure part (14a ; 14b), which preferably displays at least one recess (15) for the insertion of an Inbus key.

19. Implant according to claim 18, characterised thereby, that the closure part (14b) is mounted in press fit in the sleeve (1).

20. Implant according to claim 18, characterised thereby, that the closure part (14a) displays a thread which corresponds with an internal thread (12b) in the lower sleeve part and beyond that contains at least one recesss (15) for the application of an Inbus key.

21. Implant according to one of the claims 18 to 20, characterised thereby, that the closure part (14a ; 14b) displays a rounded external outline.

22. Implant according to the claims 5 and 18, characterised thereby, that the lower region of the sleeve (1) is filled out by an elastic synthetic material (16).

23. Implant according to the claims 5 and 18, characterised thereby, that the lower region displays a biased helical spring (17), which bears on the one hand against the underside of the intermediate diaphragm (6a) and on the other hand against the closure part (14a ; 14b).

24. Implant according to claim 23, characterised thereby, that a bending rod (18) standing under bias is provided in place of the helical spring (17).

25. Implant according to claim 1, characterised thereby, that the superstructure bearing (3) in plan view displays at least one flattening surface (19) as securing against rotation in correspondence with a thickening zone (20) in the inner region of the sleeve (1).

26. Implant according to claim 1, characterised thereby, that a pin or rail guide (21), which extends at the inner wall of the sleeve (1) and parallelly to its vertical axis and which corresponds with a recess in the superstructure bearing (3), is provided to secure the superstructure bearing (3) against rotation.

27. Implant according to at least one of the preceding claims, characterised thereby, that the sleeve (1), the screw closure (5) and in a given case the closure part (14a ; 14b) consist of metallic material which is compatible with the body and preferably of titanium or a titanium alloy.

28. Implant according to at least one of the preceding claims, characterised thereby, that the pressure plate (2a to 2d) and the superstructure bearing (3) consist of fatigue-resistant material, preferably of spring steel.

29. Implant according to at least one of the preceding claims, characterised thereby, that the sleeve (1) and the closure part (14a ; 14b) display a partial or total coating (23 or 22) with bio-active material.

30. Implant according to claim 29, characterised thereby, that the material is a compound material which was produced by isostatic, preferably hot isostatic pressing of an inorganic bio-active starting material and a metal powder which is compatible with the body and preferably a powder of titanium or a titanium alloy.

31. Implant according to claim 29 and 30, characterised thereby, that either the sleeve (1) or the closure part (14a ; 14b) at discrete surface regions displays inclusions (23) of bio-activated compound materials obtained by isostatic or hot isostatic pressing, wherein the force-locking and shape-locking anchoring of the individual compound material bodies (23) takes place under a further hot isostatic pressing.

## Revendications

1. Implant de racine dentaire qui est réalisé sous forme de douille dans la partie intérieure de laquelle est disposée une monture de superstructure, pourvue au moins partiellement d'une enveloppe de matière synthétique, laquelle repose sur un organe amortisseur, et qui comporte une fermeture vissée qui ferme la partie supérieure de la douille, caractérisé en ce que l'organe amortisseur est une plaque de pression en forme de membrane (2c-2d) qui est montée entre la monture de superstructure (3) et un moyen de support (6a-6d) servant d'assise à la plaque de pression et en ce que la fermeture vissée (5), en position de fonctionnement, entoure, de préférence sous pression, la partie supérieure de l'enveloppe de matière synthétique (4) de telle manière qu'il en résulte, dans la région interne de la partie supérieure de la douille (1), une mise en contact positif, par la forme, de l'enveloppe de matière synthétique (4) d'une part avec la partie supérieure de la monture de superstructure (3) et d'autre part avec la fermeture vissée (5).

2. Implant selon la revendication 1, caractérisé en ce que le moyen de support est réalisé sous forme de rampe (6c) s'étendant tout autour.

3. Implant selon la revendication 1, caractérisé en ce que le moyen de support comprend au moins trois ergots radiaux (6d) orientés vers l'intérieur.

4. Implant selon la revendication 1, caractérisé en ce que le moyen de support est la partie supérieure d'une zone d'épaississement cylindrique (6b) à l'intérieur de la douille (1).

5. Implant selon la revendication 1, caractérisé en ce que le moyen de support est une membrane intermédiaire (6a) séparant hermétiquement la douille (1) en une zone supérieure tournée vers la superstructure ainsi qu'en une zone inférieure tournée vers le support osseux d'implant (7).

6. Implant selon au moins l'une des revendications précédentes, caractérisé en ce que la plaque de pression (2a-2d) repose lâchement sur le moyen de support (6a-6d).

7. Implant selon au moins l'une des revendications précédentes, caractérisé en ce que le moyen de support (6a-6d) pour la plaque de pression (2a-2d) est disposé dans une position à l'intérieur de la zone entre le tiers supérieur et le cinquième inférieur de la douille (1).

8. Implant selon la revendication 1, caractérisé en ce que la plaque de pression est réalisée sous forme de disque rond (2a) – de préférence avec un trou central (8).

9. Implant selon la revendication 8, caractérisé en ce que la plaque de pression (2c) est réalisée sous forme de disque rond (2a) qui comporte additionnellement un bourrelet annulaire (10) dans sa zone marginale.

10. Implant selon l'une des revendications 8 et 9, caractérisé en ce que la plaque de pression (2a-2d) comporte une pluralité de fentes (9) qui s'étendent de la périphérie de la plaque de pression (2b) vers le centre de celle-ci sans atteindre la région centrale – éventuellement pourvue d'un trou central (8) – de la plaque de pression (2b) elle-même.

11. Implant selon au moins l'une des revendications 1 et 8 à 10, caractérisé en ce que la plaque de pression (2d) est réalisée par enlèvement d'au moins un segment de plaque (11a, 11b) en forme de segment de cercle.

12. Implant selon au moins l'une des revendications 1 et 8 à 11, caractérisé en ce que la plaque de pression (2a-2d) présente un profil d'épaisseur variable en section transversale.

13. Implant selon au moins l'une des revendications 1 et 8 à 12, caractérisé en ce que la face supérieure et la face inférieure de la plaque de pression (2a-2d) présentent respectivement une forme plane et/ou sphérique et/ou asphérique.

14. Implant selon la revendication 1, caractérisé en ce que la monture de superstructure (3) présente, dans sa région de base (3a), une géométrie cylindrique en section transversale cylindrique et est réalisée en forme de tige ou de goulot de bouteille dans sa zone (3b) orientée vers la superstructure, au moins la zone citée en dernier lieu étant pourvue d'une enveloppe de matière synthétique (4).

15. Implant selon la revendication 14, caractérisé en ce que la portion de base (3a) de la monture de superstructure (3) est maintenue positivement par la forme dans l'espace interne supérieur de la douille (1).

16. Implant selon l'une des revendications 14 et 15, caractérisé en ce que la portion (3b), se rétrécissant vers le haut, de la monture de superstructure (3) est réalisée sous forme de col fileté pour la fixation amovible de la superstructure.

17. Implant selon la revendication 1, caractérisé en ce que la douille (1) comporte, pour la réalisation d'une technique d'implantation en deux temps, un filetage interne (12a) dans sa zone supérieure pour le logement temporaire d'une fermeture de douille (13).

18. Implant selon la revendication 1, caractérisé en ce que la partie, orientée vers le support d'implant osseux (7), de la douille, comporte un élément de fermeture insérable (14a ; 14b) qui présente de préférence au moins un évidement (15) pour l'introduction d'une clé Inbus.

19. Implant selon la revendication 18, caractérisé en ce que l'élément de fermeture (14b) est maintenu à ajustement serré dans la douille (1).

20. Implant selon la revendication 18, caractérisé en ce que l'élément de fermeture (14a) comporte un filetage qui est conjugué d'un filetage interne (12b) dans la partie inférieure de douille et contient en outre au moins un évidement (15) pour l'application d'une clé Inbus.

21. Implant selon l'une des revendications 18 à 20, caractérisé en ce que l'élément de fermeture (14a ; 14b) comporte un contour extérieur arrondi.

22. Implant selon les revendications 5 et 18, caractérisé en ce que la région inférieure de la douille (1) est remplie d'une matière en substance synthétique élastique (16).

23. Implant selon les revendications 5 et 18, caractérisé en ce que la zone inférieure comporte un ressort hélicoïdal précontraint (17) qui s'applique d'une part contre la face inférieure de la membrane intermédiaire (6a) et d'autre part contre l'élément de fermeture (14a ; 14b).

24. Implant selon la revendication 23, caractérisé en ce qu'une baguette de flexion (18) placée sous précontrainte est prévue à la place du ressort hélicoïdal (17).

25. Implant selon la revendication 1, caractérisé en ce que la monture de superstructure (3) présente, en vue de dessus, au moins une surface à méplat (19) comme sécurité contre la rotation, qui est conjuguée d'une zone d'épaississement correspondante (20) dans la région interne de la douille (1).

26. Implant selon la revendication 1, caractérisé en ce que comme sécurité contre la rotation pour la monture de superstructure (3) est prévu un guidage à tige ou à rail (21) s'étendant contre la paroi interne de la douille (1) parallèlement à son axe vertical, lequel est conjugué d'un évidement correspondant dans la monture de superstructure (3).

27. Implant selon au moins l'une des revendications précédentes, caractérisé en ce que la douille (1), la fermeture vissée (5) et – éventuellement – l'élément de fermeture (14a ; 14b) consistent en une matière métallique compatible avec le corps, de préférence en titane ou en un alliage de titane.

28. Implant selon au moins l'une des revendications précédentes, caractérisé en ce que la plaque de pression (2a-2d) et la monture de superstructure (3) consistent en une matière à endurance à la fatigue aux efforts alternés, de préférence en acier à ressort.

29. Implant selon au moins l'une des revendications précédentes, caractérisé en ce que la douille (1) et l'élément de fermeture (14a ; 14b) comportent un revêtement en couche partiel ou total (23 ou 22) à matière bioactive.

30. Implant selon la revendication 29, caractérisé en ce que la matière est une substance composite qui a été fabriquée par compression isostatique, de préférence isostatique à chaud, d'une matière de départ anorganique bioactive et d'une poudre de métal compatible avec le corps, de préférence d'une poudre de titane ou d'alliage de titane.

31. Implant selon la revendication 29 et 30, caractérisé en ce que la douille (1) ou l'élément de fermeture (14a ; 14b) comporte, en des zones superficielles discrètes, des inclusions (23) de substances composites bioactives obtenues par compression isostatique ou isostatique à chaud, auquel cas l'ancrage positif, par la force et par la forme, des divers corps en matière composite (23) s'effectue de nouveau sous compression isostatique à chaud.

Fig.1

Fig.2

Fig.13

Fig.3

Fig.4

Fig.5

Fig.6

*Fig. 7a*

*Fig. 8a*

*Fig. 9a*

*Fig. 7b*

*Fig. 8b*

*Fig. 9b*

*Fig. 10a*

*Fig. 11a*

*Fig. 11b*

*Fig. 10b*

*Fig. 12a*

*Fig. 12b*

Fig. 14